# DEMANDE DE BREVET EUROPEEN

(11) **EP 2 887 633 A1**
(43) Date de publication de la demande: **24.06.2015**
(21) Numéro de dépôt: 14198098.7
(22) Date de dépôt: 16.12.2014
(51) Int. Cl.: H04N 1/12, H04N 1/191, H04N 1/387, H04N 1/32, H04N 1/00

(54) **Procédé de numérisation d'un document constitué de plusieurs pages**

(30) Priorité: 17.12.2013 FR 1362736
(71) Demandeur: SAGEMCOM DOCUMENTS SAS, 92500 Rueil Malmaison (FR)
(72) Inventeur: Picard, François, 92500 RUEIL MALMAISON (FR)
(74) Mandataire: Maillet, Alain

(57) **Abrégé**

L'invention concerne un procédé de numérisation d'un document constitué de plusieurs pages, caractérisé en ce que le procédé comporte les étapes de :
- détection (E300) de la présence d'un document à numériser,
- activation (E301) de la numérisation du document à l'aide d'un capteur ligne par ligne et mémorisation de chaque ligne,
- détection de début (E303) et de fin (E306) de page et mémorisation (E304, E307), à chaque début et de fin de page, de la valeur d'un compteur de ligne
- maintien de l'activation du capteur ligne et mémorisation de chaque ligne entre chaque page,
- formation (E309, E310, E311) d'un fichier comportant des métadonnées et un fichier comprenant des informations représentatives de l'ensemble des lignes captées par le capteur, les métadonnées comportant au moins des informations représentatives des débuts et fins de pages et des valeurs du compteur de lignes mémorisées.

## Description

La présente invention concerne un procédé et un dispositif de numérisation d'un document constitué de plusieurs pages.

Dans les dispositifs de numérisation de documents comportant une pluralité de pages, il est classique de numériser et traiter une page avant de démarrer la numérisation de la page suivante. Ceci pénalise la vitesse de numérisation du document car il est nécessaire d'attendre que le traitement de la page, souvent long, se termine pour traiter la page suivante.

D'autres dispositifs de numérisation peuvent, de par leur capacité en ressource mémoire et leur puissance, numériser la page suivante sans avoir à attendre que le traitement de la page précédemment numérisée soit terminé. Rapides, ces dispositifs sont souvent très coûteux.

La présente invention vise à résoudre les problèmes susmentionnés en proposant un dispositif de numérisation de documents qui soit rapide tout en restant dans une gamme de prix raisonnable.

A cette fin, selon un premier aspect, l'invention propose un procédé de numérisation d'un document constitué de plusieurs pages, caractérisé en ce que le procédé comporte les étapes de :
- détection de la présence d'un document à numériser,
- activation de la numérisation du document à l'aide d'un capteur ligne par ligne et mémorisation de chaque ligne,
- détection de début et de fin de page et mémorisation, à chaque début et de fin de page, de la valeur d'un compteur de ligne,
- maintien de l'activation du capteur ligne et mémorisation de chaque ligne entre chaque page,
- formation d'un fichier comportant des métadonnées et un fichier comprenant des informations représentatives de l'ensemble des lignes captées par le capteur, les métadonnées comportant au moins des informations représentatives des débuts et fins de pages et des valeurs du compteur de ligne mémorisées.

La présente invention concerne aussi un dispositif de numérisation d'un document constitué de plusieurs pages, caractérisé en ce que le dispositif comporte :
- des moyens de détection de la présence d'un document à numériser,
- des moyens d'activation de la numérisation du document à l'aide d'un capteur ligne par ligne et mémorisation de chaque ligne,
- des moyens de détection de début et de fin de page et mémorisation, à chaque début et de fin de page, de la valeur d'un compteur de ligne,
- des moyens de maintien de l'activation du capteur ligne et mémorisation de chaque ligne entre chaque page,
- des moyens de formation d'un fichier comportant des métadonnées et un fichier comprenant des informations représentatives de l'ensemble des lignes captées par le capteur, les métadonnées comportant au moins des informations représentatives des débuts et fins de pages et des valeurs du compteur de ligne mémorisées.

Ainsi, en activant le capteur ligne par ligne pendant toute la durée de la numérisation du document et même entre les pages sans effectuer d'autre traitement sur le document numérisé, le temps nécessaire à la numérisation du document est réduit. De plus, en gardant le capteur ligne par ligne entre chaque page, il est possible, dans un traitement post numérisation de corriger d'éventuels problèmes de biais des pages numérisées.

Selon un mode particulier de l'invention, on sépare les métadonnées et le fichier comprenant des informations représentatives de l'ensemble des lignes captées par le capteur et on partitionne l'ensemble des lignes en pages à partir des métadonnées.

Ainsi, le traitement et le partitionnement en page, effectués postérieurement à la numérisation de l'ensemble du document, ne pénalisent pas la vitesse de numérisation et permettent de garder une présentation page par page du document. Le traitement et le partitionnement peuvent ainsi être effectués sur un dispositif disposant d'une puissance de calcul bien supérieure à celle du dispositif de numérisation d'un document.

Selon un mode particulier de l'invention, les informations représentatives de l'ensemble des lignes captées par le capteur sont des coefficients obtenus par une compression de l'ensemble des lignes captées et le procédé comporte en outre l'étape, exécutée préalablement au partitionnement de l'ensemble des lignes en pages à partir des métadonnées, de décompression des informations représentatives de l'ensemble des lignes captées par le capteur et de compression de chaque page partitionnée.

Ainsi, la taille du fichier est réduite.

Selon un mode particulier de l'invention, un traitement des pages partitionnées est effectué pour corriger au moins un défaut lié à la numérisation du document.

Ainsi, la qualité finale du document numérisé est améliorée.

Selon un mode particulier de l'invention, on encapsule chaque page partitionnée et traitée dans un fichier.

Selon un mode particulier de l'invention, le document est un document recto verso.

Selon un mode particulier de l'invention, les métadonnées comportent en outre des mesures de capteur de défilement de papier, une information identifiant une page.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un exemple de réalisation d'un dispositif de numérisation d'un document selon la présente invention;
la Fig. 2 représente un dispositif de partitionnement d'un document numérisé selon la présente invention ;
la Fig. 3 représente un exemple d'algorithme de numérisation d'un document selon la présente invention;
les Figs. 4a et 4b représentent deux exemples de la structure de fichiers obtenus lors de la numérisation d'un document selon la présente invention ;
la Fig. 5 représente un exemple d'algorithme de partitionnement d'un document numérisé selon la présente invention.

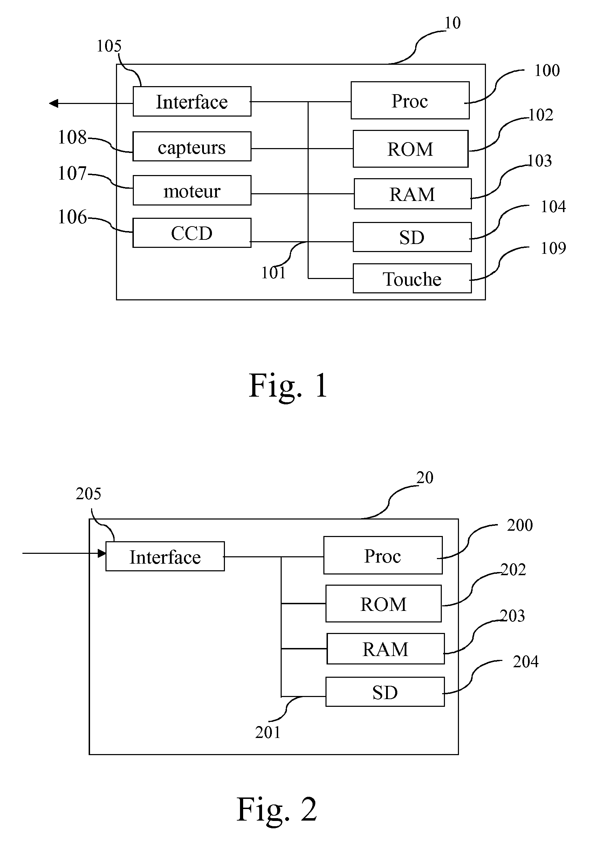

La **Fig. 1** représente un exemple de réalisation d'un dispositif de numérisation d'un document selon la présente invention.

Le dispositif de numérisation d'un document 10 comprend :
- un processeur, micro-processeur, microcontrôleur 100 ;
- une mémoire volatile 103 ;
- une mémoire non volatile 102;
- éventuellement, un lecteur 104 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 105 avec un réseau de communication, comme par exemple un réseau de radiotéléphonie cellulaire ou Internet, un réseau LAN, Wifi, une connexion USB par laquelle des documents à traiter selon la présente invention sont émis ;
- un capteur 106 pour la numérisation de documents tel que par exemple au moins un capteur CCD ou CIS recto verso qui numérise ligne par ligne le document ;
- des capteurs 108 tels qu'un capteur de présence d'un document à numériser, d'un capteur de détection d'un début de page à numériser ;
- un moteur 107 permettant le déplacement du document à numériser ;
- un moyen de déclenchement de la numérisation d'un document tel que par exemple une touche 109 ;
- un bus de communication 101 reliant le processeur 100 à la mémoire ROM 102, à la mémoire RAM 103, au lecteur de médium de stockage 104 et à l'interface 105, aux capteurs 106 et 108, aux moyens de commande du moteur 107 et à la touche 109.

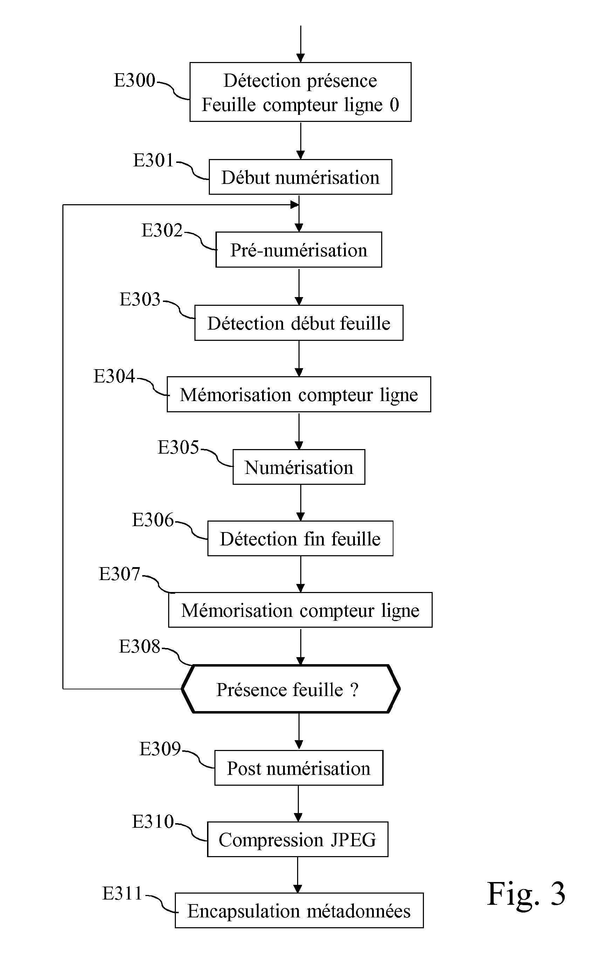

Le processeur 100 est capable d'exécuter des instructions chargées dans la mémoire volatile 103 à partir de la mémoire non volatile 102, d'une mémoire externe (non représentée), d'un support de stockage, tel qu'une carte SD ou autre, ou d'un réseau de communication. Lorsque le dispositif de numérisation de documents 10 est mis sous tension, le processeur 100 est capable de lire de la mémoire volatile 103 des instructions et de les exécuter. Ces instructions forment un programme d'ordinateur qui cause la mise en oeuvre, par le processeur 100, de tout ou partie des procédés décrits en relation avec la Fig. 3.

Tout ou partie des procédés décrits en relation avec la Fig. 3 peuvent être implémentés sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC *(Application-Specific Integrated Circuit* en anglais ou *Circuit Intégré Spécifique à une Application* en français).

La **Fig. 2** représente un exemple de réalisation d'un dispositif de partitionnement d'un document numérisé selon la présente invention.

Le dispositif de partitionnement d'un document numérisé 20 comprend :
- un processeur, micro-processeur, microcontrôleur 200 ;
- une mémoire volatile 203 ;
- une mémoire non volatile 202;
- éventuellement, un lecteur 204 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 205 avec un réseau de communication, comme par exemple un réseau de radiotéléphonie cellulaire ou Internet, un réseau LAN, Wifi, une connexion USB par laquelle des documents à traiter selon la présente invention sont reçus ;
- un bus de communication 201 reliant le processeur 200 à la mémoire ROM 202, à la mémoire RAM 203, au lecteur de médium de stockage 204 et à l'interface 205.

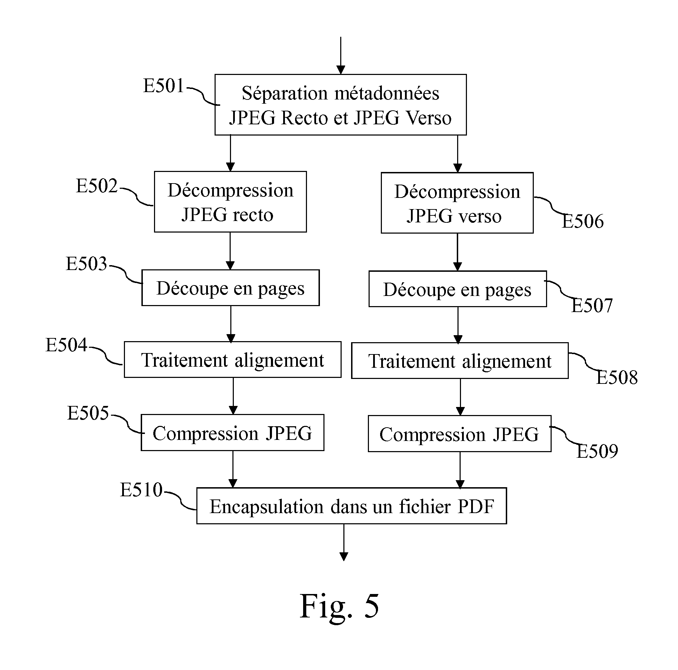

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de partitionnement d'un document numérisé 20 est mis sous tension, le processeur 200 est capable de lire de la mémoire volatile 103 des instructions et de les exécuter. Ces instructions forment un programme d'ordinateur qui cause la mise en oeuvre, par le processeur 200, de tout ou partie des procédés décrits en relation avec la Fig. 5.

Tout ou partie des procédés décrits en relation avec la Fig. 5 peuvent être implémentés sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémentés sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un exemple d'algorithme de numérisation d'un document selon la présente invention.

Plus précisément, le présent algorithme est exécuté par le processeur 100 du dispositif de dispositif de numérisation d'un document 10.

Le document est selon le premier exemple un document recto verso qui est destiné à être numérisé et compressé selon un algorithme de compression de type JPEG.

A l'étape E300, le capteur de présence d'un document détecte la présence d'un document à numériser. Le document est constitué d'une ou plusieurs feuilles recto ou recto verso.

A cette même étape, le processeur 100 initialise un compteur de lignes à une valeur prédéterminée, par exemple la valeur nulle.

A l'étape E301, le processeur 100 détecte une commande pour la numérisation d'un document. La commande est par exemple une action sur la touche 109 du dispositif de numérisation d'un document 10 par l'utilisateur du dispositif de numérisation d'un document 10.

A l'étape suivante E302, le processeur 100 commande le début de la numérisation du document. Lors de la numérisation du document, le processeur 100 commande le moteur 107 pour que le capteur CCD procède à l'acquisition ligne par ligne du document et incrémente le compteur de lignes à chaque lecture d'une ligne du document par le capteur CCD.

Le processeur 100 génère une commande du moteur 107 qui fait avancer le document de la valeur de la hauteur d'une ligne d'analyse du document. La ligne acquise est mémorisée dans la mémoire vive 103.

Au bout d'un certain nombre de commandes moteur, le bord bas du document à numériser est détecté par le capteur début de feuille à l'étape E303.

A l'étape suivante E304, le processeur 100 mémorise une information représentative de la détection d'un début de feuille ainsi que la valeur du compteur de lignes.

A l'étape suivante E305, la numérisation proprement dite du document est effectuée. Le processeur 100 commande un certain nombre de cycles de commande moteur qui fait avancer le document de la valeur de la hauteur d'une ligne d'analyse du document, une acquisition vidéo qui stocke en mémoire l'information d'image d'une ligne du document présente au droit du capteur d'image et une incrémentation d'une unité du compteur de lignes.

Au bout d'un certain nombre de cycles de commande, le bord haut de la première page du document à numériser est détecté à l'étape E306 par le capteur de bord de feuille.

A l'étape suivante E307, le processeur 100 mémorise une information représentative de la détection d'une fin de feuille ainsi que la valeur du compteur de lignes.

A l'étape suivante E308, le processeur 300 vérifie si au moins une feuille est présente dans le chargeur de document du dispositif de numérisation 10. Si au moins une feuille est présente dans le chargeur de document du dispositif de numérisation 10, le processeur 100 retourne à l'étape E302 et maintient la commande du moteur 107 pour que le capteur CCD continue l'acquisition ligne par ligne et une incrémentation du compteur de lignes à chaque lecture d'une ligne par le capteur CCD.

Dans la négative, le processeur 100 passe à l'étape E309.

A l'étape E309, le processeur 100 démarre un processus d'analyse de la fin de la feuille. Ce processus d'analyse de la fin de la feuille permet de compenser la différence entre la position du capteur CCD et la position du capteur de fin de feuille. Le processeur 100 commande un nombre prédéterminé de cycles de commande correspondant au moins à la distance séparant le capteur fin de page et le capteur CCD. Le processeur 100 commande le moteur qui fait avancer le document de la valeur de la hauteur d'une ligne d'analyse du document, une acquisition vidéo qui stocke en mémoire l'information d'image d'une ligne du document présente au droit du capteur d'image et incrémente d'une unité le compteur de lignes.

A l'étape suivante E310, le processeur 100 commande la compression des lignes mémorisées. La compression est par exemple effectuée avec un algorithme de compression de type JPEG.

A l'étape suivante E311, le processeur 100 procède à une encapsulation du ou des fichiers JPEG obtenus avec des métadonnées. Les métadonnées sont les différentes valeurs du compteur de lignes ainsi que les informations représentatives d'un début ou d'une fin de page.

Il est à remarquer ici que les métadonnées peuvent comporter en outre des résultats de mesures de capteur de défilement de papier dans le cas d'applications nécessitant une très grande précision de positionnement de lignes, ou bien enregistrer le numéro de ligne au moment d'un certain appui touche permettant par exemple de marquer une feuille comme étant à supprimer du document numérisé, ou encore un mémo vocal corrélé avec le numéro de ligne permettant par exemple de nommer à la volée une feuille et de la traiter par une application reconnaissant ce nom et l'affectant au nom de fichier scanné.

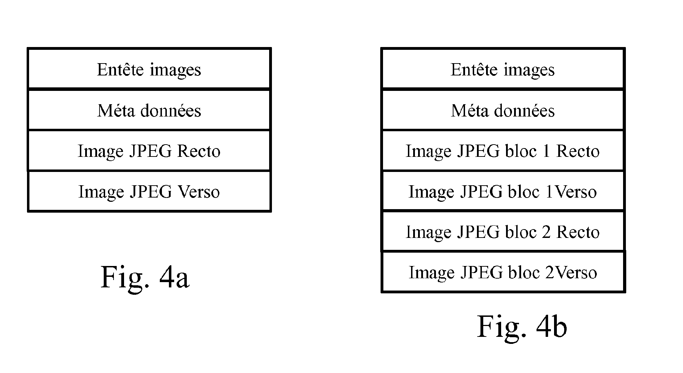

Les **Figs. 4a et 4b** représentent deux exemples de la structure de fichiers obtenus lors de la numérisation d'un document selon la présente invention.

La Fig. 4a représente un exemple de fichier obtenu à l'étape E311 de l'algorithme de la Fig. 3.

Dans l'exemple de la Fig. 4a, le document numérisé est un document recto verso. Le fichier est constitué d'un en-tête qui décrit par exemple les dimensions de chaque image produite par la numérisation du document, les métadonnées, un fichier compressé pour le recto du document et un fichier compressé pour le verso du document. Le fichier ainsi formé est par exemple un fichier de type PDF.

La Fig. 4b représente un exemple de fichier obtenu à l'étape E311 de l'algorithme de la Fig. 3 lorsque le document numérisé est volumineux. Une image compressée JPEG ne peut contenir plus de 65535 lignes. Si un nombre supérieur de lignes a été numérisé, plusieurs fichiers sont créés. Dans l'exemple de la Fig. 4b, le document numérisé est un document recto verso. Le fichier est constitué d'un en-tête qui décrit par exemple les dimensions de chaque image produite par la numérisation du document, le nombre et l'emplacement des blocs dans l'image recto ou verso, les métadonnées, des blocs compressés pour le recto du document et des blocs compressé pour le verso du document. Le fichier ainsi formé est par exemple un fichier de type PDF.

La **Fig. 5** représente un exemple d'algorithme de partitionnement d'un document numérisé selon la présente invention.

Plus précisément, le présent algorithme est exécuté par le processeur 200 du dispositif de partitionnement d'un document 20.

Préalablement à l'étape E501, le dispositif de partitionnement d'un document 20 reçoit un fichier tel que produit par l'algorithme décrit en référence à la Fig. 3.

A l'étape E501, le processeur 200 désencapsule le fichier reçu. Le processeur 200 sépare l'en-tête, les métadonnées et chaque fichier ou bloc JPEG compris dans le fichier.

Les étapes suivantes E502 à E505 sont par exemple effectuées en parallèle des étapes E506 à E509.

A l'étape E502, le processeur 200 décompresse le fichier recto.

A l'étape suivante E503, le processeur 200 procède à une découpe par page du fichier JPEG recto.

Pour cela, le processeur 200 traite les informations représentatives des débuts et fins de page ainsi que les valeurs du compteur de lignes associées. Plus précisément, le processeur 200 applique une marge à chacune des valeurs du compteur de lignes. Par exemple, le processeur 200 retranche 15 lignes à chaque valeur de début de page et ajoute 15 lignes à chaque valeur de fin de page.

Le processeur 200 forme ainsi autant de pages que de débuts de page.

A l'étape suivante E504, le processeur 200 procède à au moins un traitement d'image sur chaque page.

Par exemple, le processeur 200 effectue un recadrage de chaque page de manière à corriger le biais des pages du document numérisé.

Par exemple, le processeur 200 effectue un traitement visant à corriger d'éventuels effets liés à la transparence du document numérisé.

A l'étape suivante E505, le processor 200 commande la compression de chaque page du document selon un format de type JPEG.

A l'étape E506, le processeur 200 décompresse le fichier verso.

A l'étape suivante E507, le processeur 200 procède à une découpe par page du fichier JPEG verso.

Pour cela, le processeur 200 traite les informations représentatives des débuts et fins de page ainsi que les valeurs du compteur de lignes associées. Plus précisément, le processeur 200 applique une marge à chacune des valeurs du compteur de lignes. Par exemple, le processeur 200 retranche 15 lignes à chaque valeur de début de page et ajoute 15 lignes à chaque valeur de fin de page.

Le processeur 200 forme ainsi autant de pages que de débuts de page.

A l'étape suivante E508, le processeur 200 procède à au moins un traitement d'image sur chaque page.

Par exemple, le processeur 200 effectue un recadrage de chaque page de manière à corriger le biais des pages du document numérisé.

Par exemple, le processeur 200 effectue un traitement visant à corriger d'éventuels effets liés à la transparence du document numérisé.

A l'étape suivante E509, le processeur 200 commande la compression de chaque page du document selon un format de type JPEG.

Lorsque les étapes E505 et E509 ont été effectuées, le processor 200 encapsule dans un fichier par exemple de type PDF, les fichiers compressés

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

## Revendications

1. Procédé de numérisation d'un document constitué de plusieurs pages, **caractérisé en ce que** le procédé comporte les étapes de :
- détection (E300) de la présence d'un document à numériser,
- activation (E301) de la numérisation du document à l'aide d'un capteur ligne par ligne et mémorisation de chaque ligne,
- détection de début (E303) et de fin (E306) de page et mémorisation (E304, E307), à chaque début et de fin de page, de la valeur d'un compteur de ligne,
- maintien de l'activation du capteur ligne et mémorisation de chaque ligne entre chaque page,
- formation (E309, E310, E311) d'un fichier comportant des métadonnées et un fichier comprenant des informations représentatives de l'ensemble des lignes captées par le capteur, les métadonnées comportant au moins des informations représentatives des débuts et fins de pages et des valeurs du compteur de lignes mémorisées.

2. Procédé selon la revendication 1, **caractérisé en ce que** le procédé comporte en outre les étapes de :
- séparation (E501) des métadonnées et du fichier comprenant des informations représentatives de l'ensemble des lignes captées par le capteur,
- partitionnement (E503, E507) de l'ensemble des lignes en pages à partir des métadonnées.

3. Procédé selon la revendication 2, **caractérisé en ce que** les informations représentatives de l'ensemble des lignes captées par le capteur sont des coefficients obtenus par une compression de l'ensemble des lignes captées et le procédé comporte en outre l'étape, exécutée préalablement au partitionnement de l'ensemble des lignes en pages à partir des métadonnées, de décompression (E502, E506) des informations représentatives de l'ensemble des lignes captées par le capteur et de compression de chaque page partitionnée.

4. Procédé selon la revendication 3, **caractérisé en ce que** le procédé comporte en outre une étape de traitement (E504, E508) des pages partitionnées pour corriger au moins un défaut lié à la numérisation du document.

5. Procédé selon la revendication 4, **caractérisé en ce que** le procédé comporte en outre une étape d'encapsulation (E510) de chaque page partitionnée et traitée dans un fichier.

6. Procédé selon l'une quelconque des revendications précédentes, **caractérisé en ce que** le document est un document recto verso.

7. Procédé selon l'une quelconque des revendications précédentes, **caractérisé en ce que** les métadonnées comportent en outre des mesures de capteur de défilement de papier, une information identifiant une page.

8. Dispositif de numérisation d'un document constitué de plusieurs pages, **caractérisé en ce que** le dispositif comporte :
- des moyens (108) de détection de la présence d'un document à numériser,
- des moyens (106, 107) d'activation de la numérisation du document à l'aide d'un capteur ligne par ligne et mémorisation de chaque ligne,
- des moyens (108) de détection de début et de fin de page et mémorisation, à chaque début et de fin de page, de la valeur d'un compteur de lignes,
- des moyens (106, 107) de maintien de l'activation du capteur ligne et mémorisation de chaque ligne entre chaque page,
- des moyens de formation (100) d'un fichier comportant des métadonnées et un fichier comprenant des informations représentatives de l'ensemble des lignes captées par le capteur, les métadonnées comportant au moins des informations représentatives des débuts et fins de pages et des valeurs du compteur de ligne mémorisées.
